# FASCICULE DE BREVET EUROPEEN

(11) **EP 1 018 468 B1**
(45) Date de publication et mention de la délivrance du brevet: **08.12.2004**
(21) Numéro de dépôt: 00400017.0
(22) Date de dépôt: 06.01.2000
(51) Int. Cl.: B64D 33/10, F02C 7/14

(54) **Turbomachine avec un réducteur de vitesse équipé d'un dispositif de refroidissement**
Strömungsmaschine mit einem mit einer Abkühlvorrichtung versehenen Untersetzungsgetriebe
Turbomachine with a reduction gear equipped with a cooling device

(30) Priorité: 07.01.1999 FR 9900082
(43) Date de publication de la demande: 12.07.2000
(73) Titulaire: SNECMA MOTEURS, 75015 Paris (FR)
(72) Inventeur: Beutin, Bruno Albert, 91100 Corbeil Essonnes (FR); Brossier Pascal Noel, 77630 St. Martin en Bière (FR); Franchet, Michel François Raymond, 77240 Pouilly le Fort (FR); Lecordix, Jean-Loic Hervé, 77000 Vaux le Pénil (FR); Loubet, Marc Georges, 77350 Boissise la Bertrand (FR)

(56) Documents cités:
- EP-A- 0 514 119
- EP-A- 0 743 247
- WO-A-92/11451
- DE-A- 19 524 731
- US-A- 4 351 150
- US-A- 5 265 408

## Description

### Domaine de l'invention

L'invention se rapporte au domaine des turbomachines et, en particulier, aux turbopropulseurs, mais également aux turboréacteurs de grande puissance à double flux, tels que ceux utilisés en aéronautique civile et munis d'un réducteur de vitesse.

### Art antérieur et problème posé

Pour accroître leurs performances, tout en réduisant le bruit et la consommation de carburant, les turbomachines, telles que les turbopropulseurs, doivent posséder des hélices de type « multipale » de grand diamètre, à bas régime de rotation. Or, la puissance transmise à l'hélice tournant à faible vitesse, par le générateur de gaz tournant à grande vitesse, au moyen d'un réducteur mécanique de vitesse, engendre une grande quantité de chaleur due aux pertes mécaniques, c'est-à-dire aux frottements. On comprendra que cette chaleur doive être évacuée ou dissipée de manière efficace, pour éviter de dégrader rapidement les organes mécaniques du réducteur, tels que les engrenages et les paliers, ou de dégrader les qualités du lubrifiant du réducteur, sous peine de constater la chute du rendement de la turbomachine. Or, même avec un rendement proche ou dépassant légèrement les 99 %, le réducteur de vitesse d'une turbomachine d'une puissance mécanique de 10 000 kW dégage, malgré tout, une puissance thermique proche de 100 kW due aux pertes mécaniques.

Il est bien connu, dans le domaine de l'art antérieur, d'évacuer ce type de chaleur, c'est-à-dire de dissiper une telle puissance thermique, en faisant circuler le lubrifiant du réducteur de vitesse, en circuit fermé, au moyen d'une pompe ou d'un thermosiphon, dans un radiateur, tel qu'un radiateur à huile ou un échangeur air/huile.

La figure 1, ainsi que le document DE 195 24 731, montre, en coupe, une réalisation possible de ce refroidissement. Sur cette figure 1, on distingue l'hélice 1 entraînée par le générateur de gaz 2, par l'intermédiaire du réducteur de vitesse 3. Celui-ci est refroidi grâce à une circulation du lubrifiant, par un circuit 4, dans un radiateur 6 placé dans l'écope inférieure 5 du turbopropulseur. Le radiateur 6 peut également être placé sous l'aile 20 de l'avion, ou même latéralement.

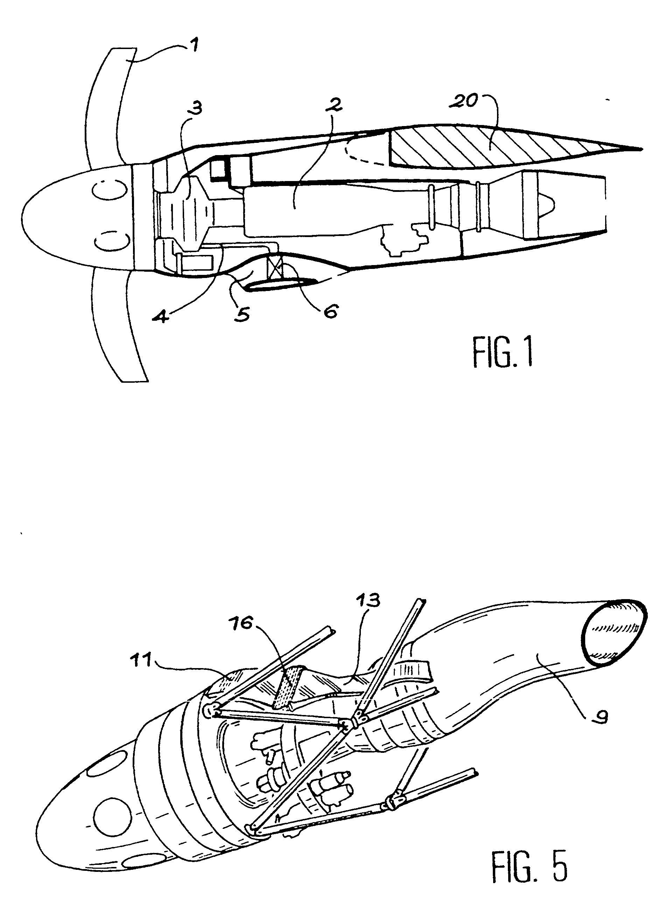

Dans le cas de la figure 1, l'air en mouvement traversant le radiateur 6 évacue la chaleur vers l'extérieur de l'écope 5 et le lubrifiant refroidi retourne dans le réducteur de vitesse 3 par le circuit de refroidissement 4. Un volet peut éventuellement être situé à l'entrée ou à la sortie de l'écope 5 pour réguler le débit d'air traversant le radiateur 6, afin de stabiliser la température du lubrifiant. En effet, à grande vitesse, le radiateur 6 se trouve surdimensionné par rapport aux basses vitesses. Or, il s'avère que ce type de radiateur 6, en particulier les échangeurs air/huile de réducteur, sont nécessairement de grande taille, dans le but d'évacuer une importante puissance thermique. C'est le cas notamment pendant les vols à basses vitesses, ou même en position prolongée de parking, la turbomachine fonctionnant au ralenti, et enfin, lors des roulages sur les pistes. Un tel matériel est donc lourd, encombrant, pénalise la traînée de la turbomachine, nécessite une grande quantité d'huile, et est très vulnérable aux ingestions d'oiseaux.

D'autre part, ce dernier inconvénient ne se pose pas avec un dispositif de refroidissement, tel que décrit par la demande de brevet français n° FR-A-2 742 479 du même déposant. En effet, dans ce système de refroidissement, on utilise le dispositif destiné au préalable à aspirer la couche limite de l'écoulement de l'air le long de la nacelle de la turbomachine, notamment dans la zone où cet écoulement devient turbulent, lorsque s'accroît la vitesse de l'avion. Ce système est composé de trous pratiqués sur le capot pour attirer l'air dans un collecteur où se trouve un échangeur de chaleur de grande longueur, faisant partie du dispositif de refroidissement.

Or, compte tenu du très faible débit de ces trous d'aspiration, ce système nécessite la présence d'un échangeur de chaleur de très grande longueur, qui est donc très encombrant.

L'invention a donc pour but de remédier aux inconvénients ci-dessus mentionnés.

### Résumé de l'invention

En considérant le fait qu'un avion passe plus de temps en vol à vitesse moyenne ou élevée qu'à basse vitesse ou au ralenti, il paraît astucieux de dimensionner le radiateur, air/huile, pour les phases de vol les plus longues et d'augmenter temporairement le débit d'air traversant ce radiateur 6 par un dispositif approprié pendant les phases les plus courtes, plutôt que de réduire le débit d'air traversant un radiateur surdimensionné à l'aide de volets.

A cet effet, l'objet principal de l'invention est un dispositif de refroidissement d'un réducteur de vitesse de turbomachine, ledit réducteur étant lubrifié par un lubrifiant, la turbomachine possédant au moins une manche d'entrée de circuit de circulation interne de fluide et une tuyère, le dispositif de refroidissement comprenant :
- un radiateur destiné à refroidir le lubrifiant circulant à l'intérieur grâce à un circuit de lubrifiant ; et
- au moins une conduite d'amenée d'air aboutissant au radiateur.

Selon l'invention, le dispositif de refroidissement comprend au moins une fente de prise d'air, de section très réduite, placée dans la manche d'entrée du circuit de circulation interne de fluide de la turbomachine et prolongée par la conduite d'amenée d'air au radiateur.

Il est prévu que le dispositif de refroidissement soit équipé d'une conduite d'évacuation d'air à la sortie du radiateur, débouchant dans la tuyère de la turbomachine.

Afin de moduler le débit d'air dans le radiateur, il est également avantageux de prévoir la présence d'un volet monté pivotant dans la conduite d'évacuation d'air.

Dans le but de permettre une circulation suffisante de l'air dans le radiateur, lorsque la circulation interne de fluide est insuffisante dans la turbomachine et de permettre d'utiliser un radiateur de taille réduite et dans le cas où la turbomachine possède au moins un compresseur, le dispositif de refroidissement selon l'invention comporte, en outre :
- au moins une conduite de prélèvement en air comprimé connectée sur le compresseur et débouchant dans la conduite d'évacuation avec un éjecteur/mélangeur ; et
- une vanne commandée par une unité de régulation de la turbomachine pour commander le débit d'air comprimé dans cette conduite d'alimentation en air comprimé.

### Liste des figures

L'invention et ses différentes caractéristiques techniques seront mieux comprises à la lecture de la description détaillée suivante, illustrée de quelques figures représentant respectivement :
- figure 1, en coupe, une turbomachine équipée d'un dispositif de refroidissement de l'art antérieur ;
- figure 2, en coupe, une turbomachine équipée du dispositif de refroidissement selon l'invention ;
- figure 3, une vue partielle extérieure d'une partie du dispositif selon l'invention ;
- figure 4, une vue extérieure d'une grande partie du dispositif selon l'invention ; et
- figure 5, une vue cavalière extérieure de l'invention, installée sur une turbomachine.

### Description détaillée d'une réalisation de l'invention

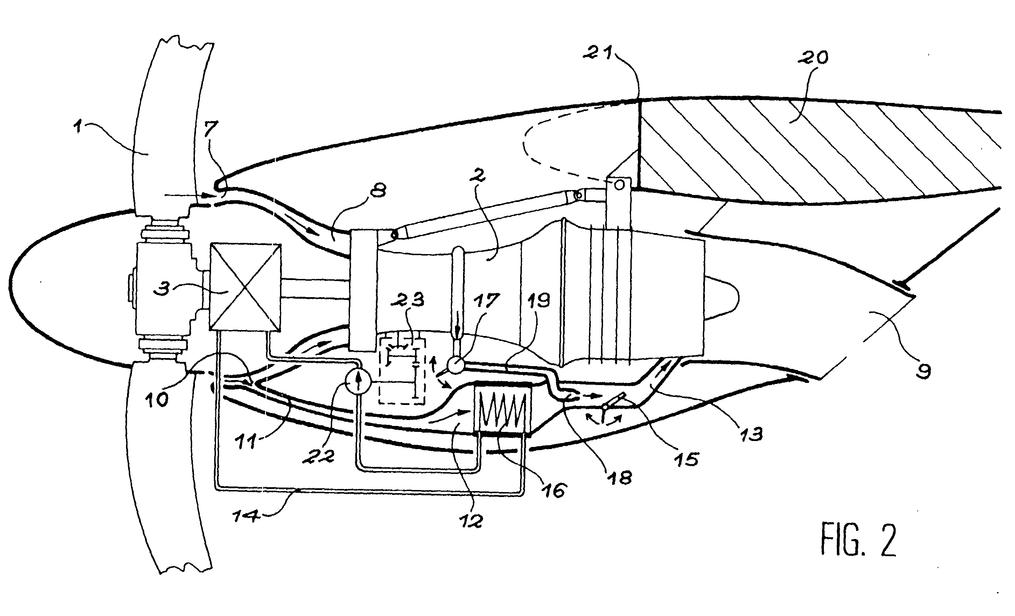

Sur la figure 2, on distingue les éléments principaux d'une turbomachine installée sous l'aile 20 d'un avion. Dans ce cas, il s'agit d'un turbomoteur. Dans la partie amont de celui-ci se trouve l'hélice 1 entraînée en rotation par la turbine 2, par l'intermédiaire du réducteur de vitesse 3. La turbine 2 est alimentée en air par une circulation interne d'air 8 dont l'entrée s'effectue par une manche d'entrée 7, placée juste en aval de l'hélice 1, au début du capot 21 du turbomoteur.

Dans le but de ne pas handicaper le rendement du turbomoteur, il a été choisi de prélever l'air de refroidissement du radiateur juste en aval de cette manche d'entrée 7. On utilise donc au moins une fente de prise d'air 10, placée sur la circulation interne d'air 8 de la turbomachine, en aval de la manche d'entrée 7, pour alimenter une conduite d'amenée d'air 11. Cette dernière est destinée à alimenter le radiateur 16 traversé par le lubrifiant et logé dans une partie centrale 12 du dispositif de refroidissement, c'est-à-dire en aval de la conduite d'amenée d'air 11 qui s'élargit dans cette partie centrale 12. La fente de prise d'air 10 a donc une forme de secteur circulaire ou en arc de cercle, en correspondance avec la courbure de la manche d'entrée 7.

Le dispositif de refroidissement se complète par une conduite d'évacuation 13, placée en aval de la partie centrale 12 pour prolonger la circulation d'air dans le radiateur 16 et évacuer cet air vers la tuyère 9 du turbomoteur 2.

On comprend facilement que, à grande vitesse, lors de vol de longue durée, ou par grand froid, l'air pénétrant dans la fente de prise d'air 7, s'acheminant par la conduite d'amenée 11 à travers le radiateur 16 et évacué vers la tuyère 9 par la conduite d'évacuation 13, puisse refroidir suffisamment le radiateur et le lubrifiant, à savoir de l'huile, qui le traverse. Pour moduler le débit d'air dans le dispositif de refroidissement, on dispose un volet 15, en aval du radiateur 16, dans la conduite d'évacuation 13. Ce volet 15 est monté pivotant pour pouvoir constituer un obstacle relatif à l'écoulement de l'air et diminuer l'efficacité de la circulation de cet air dans le dispositif de refroidissement. Un tel volet 15 peut être avantageusement commandé par le dispositif de régulation automatique du fonctionnement de la turbomachine qui est de préférence du type : « à pleine autorité redondante », c'est-à-dire du type « FADEC » (Full Authority Digital Engine Control) et actionné par un moyen électrique, électromécanique, hydraulique ou électrohydraulique connu tel qu'un vérin 24. Dans ce type d'installation, une sonde de température (non représentée), peut permettre d'assurer le maintien de l'huile à la température souhaitée et d'empêcher son figeage.

A faible vitesse, ou lors de phases plus courtes, telles que les attentes en parking, les points fixes, les ralentis au sol et les roulages par forte chaleur, où la vitesse du vent relatif est faible ou nulle, il s'avère utile d'accélérer le débit de circulation d'air dans le dispositif de refroidissement. A cet effet, on aménage en aval du radiateur 16, dans la conduite d'évacuation 13, une sortie d'air comprimé prélevé sur la turbomachine, de préférence à la sortie du compresseur, au moyen d'une conduite de prélèvement 19. Une vanne de régulation 17 est donc placée sur une telle conduite de prélèvement 19 et est pilotée également par le système central de régulation du type « FADEC ». La sortie de la conduite de prélèvement 19 dans la conduite d'évacuation 13 est un éjecteur/mélangeur à lobes 18.

L'éjection de l'air comprimé dans cet éjecteur-mélangeur à lobes 18 accélère le flux d'air provenant de la conduite d'amenée d'air 11 par un phénomène d'aspiration (effet Venturi dû au rétrécissement de section en aval de la partie centrale 12) et augmente le débit d'air de refroidissement traversant le radiateur 16.

Le débit de circulation du lubrifiant dans le circuit de lubrifiant 14 et dans le radiateur 16 est assuré au moyen d'une pompe entraînée par un support d'équipements 23, ou au moyen d'un thermosiphon.

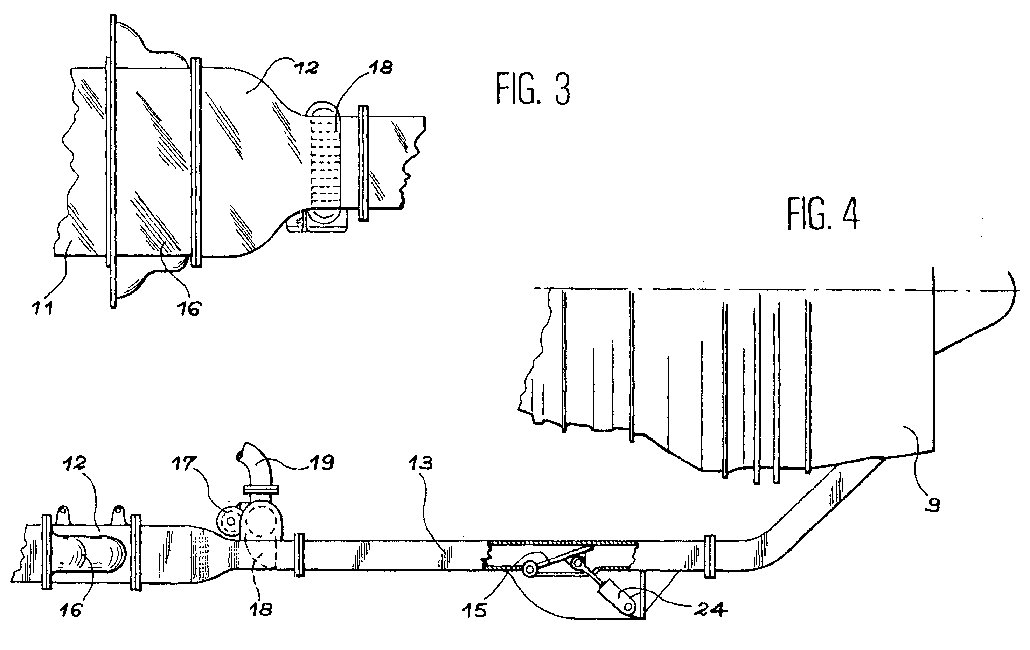

La figure 3 est une vue montrant la partie centrale 12 du dispositif à l'intérieur de laquelle est installé le radiateur 16. En aval de ces deux parties se trouve l'éjecteur/mélangeur à lobes 18 qui est représenté avec une largeur relativement importante. En fait, la section de la partie centrale 12, tout comme celle de la conduite d'amenée d'air 11 et de la conduite d'évacuation 13 sont relativement plates.

La figure 4 permet de distinguer ces éléments par une vue perpendiculaire par rapport à celle de la figure 3. Par cette forme plate du radiateur 16 et de l'ensemble de la circulation d'air dans le dispositif de refroidissement, on comprend que l'encombrement de ce dernier ne soit pas un inconvénient vis-à-vis de l'implantation du dispositif sur la turbomachine. Bien au contraire, comme le montre bien la figure 5, cette forme plate permet de loger ces conduites à l'intérieur du capot du turbomoteur, autour des éléments principaux. Sur cette figure 5, seul le radiateur 16 a été représenté avec la conduite d'amenée d'air 11 et la conduite d'évacuation 13 débouchant dans la tuyère 9.

La figure 4 montre également une mise en oeuvre du clapet 15 placé dans la conduite d'évacuation 13. Ce clapet peut donc obstruer plus ou moins la conduite d'évacuation 13. Sur cette figure 4, on distingue également l'arrivée de la conduite d'air comprimé 19, la vanne de régulation 17 et l'éjecteur/mélangeur à lobes 18 placé en aval du radiateur 16. La conduite d'évacuation 13 débouche dans la tuyère 9 et n'augmente donc pas la traînée de l'ensemble du turbomoteur.

Le fait que les sections des différentes conduites du dispositif selon l'invention soient relativement plates est en accord avec la forme plate de la fente de prise d'air 10 à l'entrée du dispositif, dans la conduite 8 de la circulation interne d'air du turbomoteur.

Le fonctionnement du dispositif selon l'invention est le suivant.

A grande vitesse, ou par grand froid, l'air capté par la fente de prise d'air 10 et traversant le dispositif est suffisant pour obtenir le refroidissement nécessaire du lubrifiant traversé dans le radiateur 16. Le volet de régulation 15 peut éventuellement être fermé partiellement dans la conduite d'évacuation 13. Il est ainsi possible de maintenir le lubrifiant à une température souhaitée.

Lors des phases d'attente, de vitesse réduite, ou par forte chaleur, le débit d'air traversant le radiateur 16 est souvent insuffisant. L'augmentation de débit d'air de refroidissement est donc apporté par l'éjecteur/mélangeur à lobes 18, commandé par la vanne de régulation 17. Cette régulation se fait en fonction du régime ou de la puissance du turbomoteur, de la température du lubrifiant du réducteur de vitesse 3, ou d'autres paramètres liés au réducteur, tels que le couple, le régime, la température extérieure. On note qu'il est préférable, lors des phases de démarrage et de mise en température du lubrifiant, puis le décollage, que l'éjecteur/mélangeur à lobes 18 soit fermé par la vanne de commande 17.

### Avantages de l'invention

La fente de prise d'air 10, en forme d'arc de cercle ou de secteur circonférentiel a une section très étroite par rapport à la section de la manche d'entrée 7, ce qui permet de résoudre le problème d'ingestion de corps étrangers volumineux risquant d'endommager considérablement le radiateur.

De plus, cette faible section de la fente de prise d'air 10 permet de diminuer fortement la traînée de la nacelle du turbomoteur par l'absence d'une écope classique, telle que celle référencée 5 sur la figure 1. On signale également que la signature infrarouge frontale de l'ensemble du turbomoteur n'est pas augmentée par l'utilisation d'une telle fente de prise d'air 10, qui, de plus, peut être située derrière un piège à particules.

Le radiateur 16 du dispositif de refroidissement selon l'invention est de taille relativement réduite, car celui-ci est dimensionné pour les phases de vol qui sont les plus représentatives de la mission de l'avion (gain de masse et d'huile).

Lors des autres phases d'utilisation du turbomoteur, l'éventuel manque d'efficacité du radiateur est donc pallié par l'apport d'air comprimé, par l'intermédiaire de l'éjecteur/mélangeur à lobes 18 qui provoque l'accélération du débit d'air de refroidissement par effet Venturi. On précise que l'éjecteur-mélangeur à lobes 18 peut être alimenté par plusieurs conduites d'alimentation prélevées au niveau du compresseur du turbomoteur.

La vitesse d'éjection des gaz d'échappement dans la tuyère 9 de la turbine 2 accélère par aspiration l'échappement de l'air circulant dans le dispositif de refroidissement selon l'invention et augmente donc l'efficacité de celui-ci. L'utilisation de l'air comprimé, lors des phases de fonctionnement au ralenti ou au sol, permet le refroidissement effectif du lubrifiant dans le réducteur de vitesse.

On réduit également la signature infra-rouge, à l'échappement, par l'injection d'air plus froid dans la tuyère et par l'absence de point chaud au niveau de la nacelle.

Le figeage du lubrifiant circulant dans le radiateur peut facilement être évité et contrôlé, grâce à la modulation de la circulation de l'air traversant le radiateur, au moyen du volet piloté 15.

## Revendications

1. Turbomachine comportant au moins une manche d'entrée d'air (7), au moins un compresseur, une tuyère (9), un réducteur de vitesse (3) lubrifié par un lubrifiant, un dispositif de refroidissement du réducteur de vitesse, le dispositif de refroidissement comportant :
- un radiateur (16) traversé par le lubrifiant,
- une conduite d'amenée d'air (11) aboutissant au radiateur (16),
- une conduite d'évacuation d'air (13) montée en sortie du radiateur (16),
**caractérisé en ce qu'**il comporte en outre :
- une fente de prise d'air (10) de section très réduite, placée dans la manche d'entrée de la turbomachine et prolongée par la conduite d'amenée d'air (11),
- une conduite de prélèvement en air comprimé (19) connectée sur le compresseur de la turbomachine et débouchant dans la conduite d'évacuation (13) au moyen d'un éjecteur/mélangeur à lobes (18),
- une vanne de commande (17) placée sur la conduite de prélèvement (19) et commandée par une unité de régulation de la turbomachine.

2. Turbomachine selon la revendication 1, **caractérisée en ce que** la conduite d'évacuation d'air (13) débouche dans la tuyère (9) de la turbomachine.

3. Turbomachine selon la revendication 2, **caractérisé en ce que** le dispositif de refroidissement comprend en outre un volet (15) monté pivotant dans la conduite d'évacuation (13).

## Patentansprüche

1. Turbotriebwerk mit mindestens einem Zuluftrohr (7), mindestens einem Verdichter, einer Düse (9), einem mit einem Schmiermittel geschmierten Untersetzungsgetriebe (3), einer Abkühlvorrichtung für das Untersetzungsgetriebe, wobei die Abkühlvorrichtung aufweist:
- einen Kühler (16), durch den das Schmiermittel fließt,
- eine Luftzufuhrleitung (11), die an dem Kühler (16) endet,
- eine Luftabführleitung (13), die am Auslass des Kühlers (16) angebracht ist,
**dadurch gekennzeichnet,**
**dass** sie ferner aufweist:
- einen Luftentnahmeschlitz (10) mit sehr kleinem Querschnitt, der in dem Zuluftrohr des Turbotriebwerks angeordnet ist und in dessen Verlängerung sich die Luftzufuhrleitung (11) befindet,
- eine Druckluftentnahmeleitung (19), die an den Verdichter des Turbotriebwerks angeschlossen ist und über eine Quirlmischer-/ Ausstoßvorrichtung (18) in die Luftabführleitung (13) mündet,
- ein Steuerventil (17), das an der Entnahmeleitung (19) angeordnet ist und von einer Regeleinheit des Turbotriebwerks gesteuert wird.

2. Turbotriebwerk nach Anspruch 1,
- **dadurch gekennzeichnet,**
**dass** die Luftabführleitung (13) in die Düse (9) des Turbotriebwerks mündet.

3. Turbotriebwerk nach Anspruch 2,
**dadurch gekennzeichnet,**
**dass** die Abkühlvorrichtung ferner eine Klappe (15) aufweist, die schwenkbar in der Luftabführleitung (13) angebracht ist.

## Claims

1. Turbomachine comprising at least one air intake scoop (7), at least one compressor, a nozzle (9), a speed reduction gear (3) lubricated by a lubricant, and a device for cooling the speed reduction gear, the cooling device comprising:
- a radiator (16) through which the lubricant flows,
- an air supply duct (11) leading to the radiator (16), and
- an air discharge duct (13) mounted at the outlet of the radiator (16),
**characterized in that** it additionally comprises:
- an air take-off slot (10) of very small cross section positioned in the intake scoop of the turbomachine and extended by the air supply duct (11),
- a compressed air bleed duct (19) connected to the compressor of the turbomachine and opening into the discharge duct (13) by means of a lobe-type ejector/mixer (18), and
- a control valve (17) positioned on the bleed duct (19) and controlled by a regulating unit of the turbomachine.

2. Turbomachine according to Claim 1, **characterized in that** the air discharge duct (13) opens into the nozzle (9) of the turbomachine.

3. Turbomachine according to Claim 2, **characterized in that** the cooling device additionally comprises a flap (15) pivotally mounted in the discharge duct (13).
